# EUROPÄISCHE PATENTSCHRIFT

(11) **EP 2 508 754 B1**
(45) Veröffentlichungstag und Bekanntmachung des Hinweises auf die Patenterteilung: **30.03.2016**
(21) Anmeldenummer: 11002782.8
(22) Anmeldetag: 04.04.2011
(51) Int. Cl.: F03D 15/00

(54) **Antriebssystem für eine Windkraftanlage**
Drive system for a wind turbine
Système de transmission pour une éolienne

(43) Veröffentlichungstag der Anmeldung: 10.10.2012
(73) Patentinhaber: Siemens Aktiengesellschaft, 80333 München (DE)
(72) Erfinder: Dinter, Ralf Martin, Dr., 45868 Gelsenkirchen (DE); Klein-Hitpass, Arno, 52074 Aachen (DE); Reimers, Jan-Dirk, 52074 Aachen (DE)

(56) Entgegenhaltungen:
- EP-A2- 1 243 791
- EP-A2- 1 544 504
- GB-A- 2 002 488

## Beschreibung

In Windkraftanlagen werden derzeit neben langsamlaufenden getriebelosen Direktantriebssystemen und mittelschnellaufenden Antriebsträngen mit ein- oder zweistufigen Getrieben auch schnellaufende Antriebstränge mit drei oder mehr Getriebestufen verwendet, die sich konzeptionell grundlegend unterscheiden. Innerhalb dieser Antriebsstrangkonzepte existiert jeweils eine Vielzähl an Varianten mit modularer, aufgelöster und teilintegrierter Systemarchitektur.

Grundsätzlich umfaßt ein Großmaschinenantriebstrang Systemkomponenten, wie Netzanbindungselemente, Motoren bzw. Generatoren, Kupplungen, Getriebe und Antriebswellen. Netzseitig sind vielfach Umrichter vorgesehen. Bremsen sind oft in Form von mechanischen Bremsen an schnellaufenden Welle zwischen Getriebe und Motor bzw. Generator vorgesehen, da dort Bremsmomente übersetzungsbedingt kleiner sind.

In EP 1 593 867 A1 ist eine Kupplung zur Übertragung großer Drehmomente beschrieben. Kernelement der Kupplung ist hierbei ein vorgespanntes elastomerhaltiges Konuslager. Dies ermöglicht, daß Kräfte, die auf die Kupplung aufgrund von großen Drehmomenten ausgeübt werden, hinreichend gedämpft werden können. Die aus EP 1 593 867 A1 bekannte Kupplung weist mehrere Kupplungselemente auf, die konstruktiv in der Weise in die Kupplung integriert sind, daß eine Trennung zu kuppelnder Teile leicht durchgeführt werden kann.

Aus EP 1 508 692 A1 ist eine Windkraftanlage mit einem einen Maschinenträger aufweisenden Gondelkopf bekannt, dem eine wenigstens einen Innenraum aufweisende Rotornabe vorgelagert ist. Ein Triebstrang der Windkraftanlage ist am Eintritt in den Gondelkopf über wenigstens ein Rotorlager am Maschinenträger abgestützt. Dabei sind ein Inneres des Gondelkopfes und ein Innenraum der Rotornabe über wenigstens einen Durchgang miteinander verbunden. Der Durchgang ist durch einen Innenring des Rotorlagers hindurchgeführt.

EP 1 045 139 A2 offenbart eine Windkraftanlage mit einem Rotor, dessen Rotornabe in einem auf einem Rotorträger angeordneten Wälzlager gelagert und mit einem zweistufigen, eine Antriebsstufe und eine Abtriebsstufe aufweisenden Planetengetriebe verbunden ist. Eine Ausgangswelle der Planetenstufe ist über eine Kupplung an einen Generator gekoppelt. Ein Innenring des Wälzlagers ist mit der Rotornabe und rotierenden Teilen des Planetengetriebes lösbar verbunden. Darüber hinaus ist ein Gehäuse des Generators mit dem Planetengetriebe lösbar zu einem Triebstrangmodul verbunden. Das Triebstrangmodul ist auf dem Rotorträger abgestützt und dadurch dynamisch entkoppelt.

In DE 10 2007 012408 A1 ist eine Windkräftanlage mit einem Rotorblatt, einer Nabe, einem ein Getriebe aufnehmenden Getriebegehäuse, einem einen Generator aufnehmenden Generatorgehäuse, einem Kopfträger, einem Turm und einem den Kopfträger drehbar auf dem Turm lagernden Azimutlager bekannt. Das Rotorlager, das Getriebegehäuse und das Generatorgehäuse sind zwischen der Nabe und dem Kopfträger angeordnet, als lastübertragende Bauteile ausgelegt und miteinander über Schraubverbindungen zusammengefügt.

Aus der älteren europäischen Patentanmeldung mit dem Anmeldeaktenzeichen 10003558.3 ist eine Antriebsvorrichtung für eine Windkraftanlage bekannt, die mindestens 2 zumindest dreischenklige Trägerelemente zur Lagerung von zumindest 3 Ritzelwellen umfaßt. Die Ritzelwellen sind jeweils mittels an Eckpunkten der Trägerelemente angeordneten Ritzelwellenlagern gelagert. Die Ritzelwellenlager sind durch Lagersitzelemente an den Trägerelementen befestigt. Mindestens ein Trägerelement ist zusätzlich zur Lagerung einer mit einer Rotornabe verbindbaren Anschlußwelle ausgestaltet, die von diesem Trägerelement umgeben ist und deren Achse durch den Mittelpunkt des Trägerelements verläuft. Eine erste Getriebestufe der erfindungsgemäßen Antriebsvorrichtung weist ein außenverzahntes Zentralrad auf. Das Zentralrad ist auf der Anschlußwelle befestigt und kämmt mit zumindest 3 Ritzeln der ersten Getriebestufe, die an ersten Enden der Ritzelwellen angeordnet sind. An zweiten Enden der Ritzelwellen sind zumindest 3 Zahnräder einer zweiten Getriebestufe angeordnet, die mit einem Zentralritzel der zweiten Getriebestufe kämmen.

WO 2008/031694 A1 offenbart ein Mühlenantriebssystem mit einem unterhalb eines Mahltellers anordenbaren Getriebe. Das Getriebe umfaßt zumindest eine Planetenstufe und weist eine vertikale Wellenlage auf. In ein Gehäuse des Getriebes ist ein elektrischer Motor integriert, der an einen Schmierstoffversorgungskreislauf des Getriebes angeschlossen ist, dessen Rotor und Stator sich vertikal erstreckende Achsen aufweisen und dessen Kühlung mittels durch das Getriebe zirkulierenden Schmierstoffs erfolgt.

In WO 2009/068484 A1 ist ein Stirnradgetriebe mit einer oder mehreren Getriebestufen zum Antrieb einer von einem Zahnkranz umschlossenen Arbeitsmaschine beschrieben, das ein die Getriebestufen aufnehmendes Getriebegehäuse und ein auf einer Abtriebswelle einer Abtriebsstufe angeordnetes, einstellbewegliches Zahnritzel umfaßt, das mit dem Zahnkranz kämmt. Das Getriebegehäuse besteht aus einem ersten in sich steifen Gehäuseteil und aus einem zweiten starren Gehäuseteil. Der erste Gehäuseteil umschließt die Abtriebsstufe mit der Abtriebswelle und dem einstellbeweglichen Zahnritzel und weist das Getriebe überragende Seitenwände auf, die auf dem Fundament aufruhen. Der zweite Gehäuseteil ist ohne Berührung mit dem Fundament an einer Stirnseite an dem ersten Gehäuseteil befestigt.

Aus WO 2010/20287 ist ein Mühlenantriebssystem mit einer integrierten Motor-Getriebeeinheit bekannt, die einen gemeinsamen Kühlkreislauf aufweist. Die Motor-Getriebeeinheit ist auf einer Bodenplatte eines die Motor-Getriebeeinheit umfassenden Gehäuses abgestützt.

In der älteren europäischen Patentanmeldung mit dem Anmeldeaktenzeichen 09011589.0 ist ein Mühlenantriebssystem mit einem unterhalb eines Mahltellers anordenbaren Getriebe mit zumindest einer Planeten- und/oder Stirnradstufe sowie einem in ein Gehäuse des Getriebes integrierten elektrischen Motor beschrieben. Außerdem umfaßt das Mühlenantriebssystem einen Umrichter mit einer zugeordneten Regelungseinrichtung zur verzahnungsspielfreien Drehzahlregelung des Motors.

Die ältere europäische Patentanmeldung mit dem Anmeldeaktenzeichen 10015077.0 offenbart einen Getriebemotor für ein Mühlenantriebssystem, der ein unterhalb eines Mahltellers oder seitlich einer Mahltrommel anordenbares Getriebe mit zumindest einer Planetenradstufe umfaßt, das entweder eine vertikale Wellenlage oder eine horizontale Wellenlage aufweist. Außerdem ist in ein Gehäuse des Getriebes ein elektrischer Motor integriert, der an einen Schmierstoffversorgungskreislauf des Getriebes angeschlossen ist. Des weiteren ist ein Umrichter mit einer zugeordneten Regelungseinrichtung zur verzahnungsspielfreien Drehzahlregelung des Motors vorgesehen. Ein Hohlrad der zumindest einen Planetenradstufe ist sowohl von einem Rotor als auch von einem Stator des Motors radial umgeben.

Aus der älteren europäischen Patentanmeldung mit dem Anmeldeaktenzeichen 11155822.7 ist ein Getriebemotor für ein Mühlenantriebssystem bekannt, das einen unterhalb oder seitlich eines Mahltellers anordenbares Getriebe mit zumindest einer Planeten- bzw. Stirnradstufe umfaßt, das eine vertikale oder horizontale Wellenlage aufweist. In ein Gehäuse des Getriebes ist ein elektrischer Motor integriert, dessen Rotor und Stator sich parallel zur Wellenlage des Getriebes erstreckende Achsen aufweisen. Ein oberer Lagerdeckel und ein unterer Lagerdeckel sind an gegenüberliegenden Stirnseiten an Rotor bzw. Stator montiert und umfassen Lagersitze für Rotorwellenlager. Zwischen dem unteren Lagerdeckel und einem Bodenteil des Gehäuses ist eine Auffangwanne für Kühlmittel gebildet. Zwischen einem Hohlrad des Getriebes und dem Gehäuse oder radial zwischen einer Rotorwelle und einem Rotorträger, an dem Rotorwicklungen bzw. Rotormagnete befestigt sind, ist ein Drehschwingungsdämpfer angeordnet, der einen Primärteil und einen drehelastisch mit dem Primärteil verbundenen Sekundärteil umfaßt.

In EP 1 243 791 A1 ist ein Antriebssystem für eine Windkraftanlage beschrieben, das eine Getriebeeinheit umfaßt, die eine Planetenradstufe mit einem Hohlrad, mehreren Planetenrädern, einem Planetenträger und einem Sonnenrad aufweist. Der Getriebeeinheit ist eine erste Welle zugeordnet, die einen mit einer Rotorwelle verbindbaren Kupplungsflansch aufweist und über den Planetenträger gelagert ist. Die Getriebeeinheit und eine mit einer zweiten Welle der Getriebeeinheit verbundene Generatoreinheit sind von einem Getriebegehäuse umgeben, das eine Aufhängung zur Verbindung mit einem tragenden Strukturelement der Windkraftanlage aufweist.

In Systemen mit angetriebenen Bauteilen, wie Windkraftanlagen oder Mühlenantriebssystemen, treten auch Kräfte auf, die unerwünscht sind und Bauteile beschädigen oder zerstören können. Diese können applikationsbedingt oder auch systemimmanent sein. Insbesondere Kupplungen zwischen Getriebe und Motor bzw. Generator, Antriebswellen und Getriebe sind vielfach schädigenden Torsions- und Schwingungskräften sowie Biegebelastungen innerhalb von An- und Abtriebswellen ausgesetzt, die zumindest zu reduzieren sind. In einigen Fällen kann dies bereits durch einen Einbau von Kräfte oder Schwingungen reduzierenden Getriebe-, Motor- oder Wellenlagerungen erreicht werden.

Insbesondere in Windkraftanlagen treten neben üblichen Maschinenantriebskräften auch durch Windeinfluß bedingte Belastungen auf. Durch teilweise stark unregelmäßige Windstärken oder -richtungen können erhebliche Zug-, Druck- und Querkräfte in Hauptwelle, Hauptlager, Maschinenrahmen und Antriebstrang eingeleitet werden. Diese Kräfte wirken als unerwünschte Zusatz- oder Sonderkräfte. Anlagenkomponenten oder -bauteile müssen diesen Zusatz- oder Sonderkräften standhalten. Als Sonderereignisse sind beispielsweise über mehrere Jahrzehnte einmalige Windböen, Bremslasten, große Lastabwürfe oder Netzfehler zu berücksichtigen. Durch derartige Sonderereignisse können erhebliche Verformungen in Hauptrahmen von Windkraftanlagen verursacht werden. Dies führt beilspielsweise zu Verschiebungen von Fundamentauflagern für Antriebstrangkomponenten. Diese Verschiebungen können wiederum Zwangskräfte im Antriebstrang hervorrufen, die zu schweren Beschädigungen an Lagern und weiteren kraftführenden Teilen eines Antriebsstrangs einer Windkraftanlage führen können.

Der vorliegenden Erfindung liegt die Aufgabe zugrunde, ein zuverlässiges, energetisch effizientes und einfach zu wartendes Antriebssystem für eine Windkraftanlage anzugeben.

Diese Aufgabe wird erfindungsgemäß durch ein Antriebssystem mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Antriebssystem weist eine zumindest eine Planetenradstufe, die ein Hohlrad, mehrere Planetenräder, einen Planetenträger und ein Sonnenrad aufweist, umfassende Getriebeeinheit auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Der Kupplungsflansch ist vorzugsweise derart gestaltet, daß er eine kardanische Ankupplung einer Arbeitsmaschine oder Rotorwelle ermöglicht, insbesondere mit Winkelversatz. Eine solche AnKupplung kann beispielsweise mittels elastischer Bolzen realisiert sein. Die Getriebeeinheit und eine mit einer zweiten Welle der Getriebeeinheit verbundene Motor- oder Generatoreinheit sind erfindungsgemäß von einem Getriebegehäuse umgeben, das eine kardanische umfangssymmetrische oder teilsymmetrische Aufhängung zur Verbindung mit einem tragenden Strukturelement der Windkraftanlage aufweist. Das tragende Strukturelement kann beispielsweise ein Fundamentlager mit einer Anbindung an einen Rahmen oder eine Gondel der Windkraftanlage sein. Durch eine doppel- oder vollkardanischen Aufhängung des Antriebssystems innerhalb des tragenden Strukturelements und durch eine kardanische Anbindung des Kupplungsflansches können lager- bzw. verzahnungsschädigende Einflüsse vermieden werden. Aufgrund von Hauptrahmenverformungen einer Windkraftanlage entstehende Verschiebungen in Fundamentauflagern, die entsprechend bisherigen Lösungen über eine Aufhängung eines Antriebstrangs in diesen eingekoppelt werden, führen erfindungsgemäß nicht zu unerwünschten Zwangskräften, sondern werden durch die kardanische Aufhängting vermieden. Damit ist das Antriebssystem lediglich Torsionsbelastungen ausgesetzt.

Bei Verwendung des erfindungsgemäßen Antriebssystems in einer Windkraftanlage ist die Getriebeeinheit mit einer Generatoreinheit verbunden. Des weiteren ist die erste Welle der Getriebeeinheit in diesem Fall eine getriebeseitige Antriebswelle. Die zweite Welle der Generatoreinheit ist dagegen eine getriebeseitige Abtriebswelle. Der Kupplungsflansch der getriebeseitigen Antriebswelle ist bei Verwendung des erfindungsgemäßen Antriebssystems in einer Windkraftanlage mit einer Rotorwelle verbindbar.

Erfindungsgemäß sind zur vollkardanischen Aufhängung axial aus einer Ringstütze oder aus Ringsegmentstützen demontierbare Elastomerbolzen vorgesehen. Außerdem weist der Kupplungsflansch in Umfangsrichtung mehrere im wesentlichen äquidistant angeordnete Bohrungen aufweist, in die axial demontierbare Elastomerbolzen eingesetzt sind, die mit einem korrespondierenden Arbeitsmaschinen- oder Rotorwellenkupplungsflansch verbindbar sind. Durch die axial demontierbaren Elastomerbolzen, die vorzugsweise einzeln tauschbar sind, kann das Antriebssystem hinsichtlich einer Wellenanordnung der Getriebeeinheit radial aus- bzw. eingebaut werden. Dies stellt eine erhebliche Erleichterung für Montage und Wartung dar. Im Vergleich zu bisherigen Lösungen wird zudem erheblich weniger Bauraum beansprucht.

Die vorliegende Erfindung wird nachfolgend an einem Ausführungsbeispiel anhand der Zeichnung näher erläutert. Es zeigt
- Figur 1: eine perspektivische Darstellung eines erfindungsgemäßen Antriebssystems für eine Windkraftanlage,
- Figur 2: eine Schnittdarstellung von Getriebekomponenten des in Figur 1 dargestellten Antriebssystem,
- Figur 3: eine schematische Darstellung eines Antriebssystems für eine Windkraftanlage einschließlich Netzanbindung,
- Figur 4: eine Ringstütze zur vollkardanischen Aufhängung des Antriebssystems gemäß Figur 1 mit einer korrespondierenden zweiarmige Drehmomentstütze,
- Figur 5: zwei Ringsegmentstützen zur vollkardanischen Aufhängung des Antriebssystems gemäß Figur 1 mit korrespondierenden Drehmomentstützen,
- Figur 6: zwei Ringsegmentstützen in einer gegenüber Figur 5 abgewandelten Variante,
- Figur 7: eine Schnittdarstellung eines Antriebssystems entsprechend Figur 1,
- Figur 8: eine Schnittdarstellung eines gegenüber Figur 7 variierten Antriebssystems,
- Figur 9: eine Schnittdarstellung eines gegenüber Figur 7 variierten weiteren Antriebssystems,
- Figur 10: eine Schnittdarstellung einer weiteren Antriebssystemvariante.

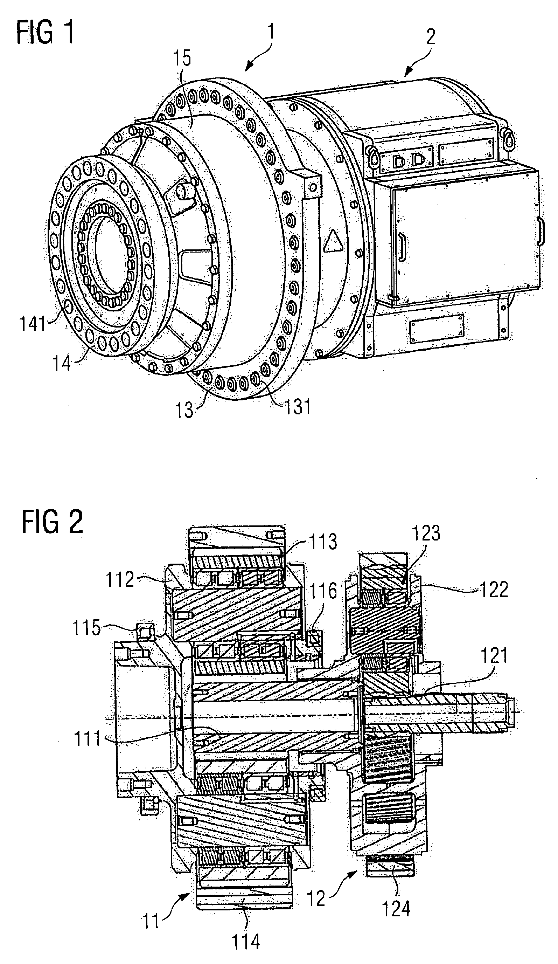

Das in Figur 1 dargestellte Antriebssystem für eine Windkraftanlage weist ein Getriebeeinheit 1 mit einer ersten 11 und zweiten Planetenradstufe 12 in koaxialer Bauform auf. Entsprechend Figur 2 umfaßt jede Planetenradstufe 11, 12 jeweils ein Hohlrad 114, 124, mehrere Planetenräder 113, 123, einen Planetenträger 112, 122 und ein Sonnenrad 111, 121. Die Getriebeeinheit 1 ist über eine Abtriebswelle der Getriebeeinheit mit einer Generatoreinheit 2 verbunden und gemeinsam mit dieser in einem Getriebegehäuse 15 angeordnet. Der Getriebeeinheit 1 ist eine an den Planetenträger 112 der ersten Planetenradstufe 11 angeformte Antriebswelle zugeordnet, die einen mit einer Rotorwelle verbindbaren Kupplungsflansch 14 aufweist und über den Planetenträger 112 der ersten Planetenradstufe 11 gelagert ist. Dem Planetenträger 112 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen.

Das Getriebegehäuse 15 weist eine vollkardanische umfangssymmetrische oder teilsymmetrische Aufhängung 13 zur Verbindung mit einem tragenden Strukturelement der Windkraftanlage auf. Dieses tragende Strukturelement ist beispielsweise ein Rahmen oder eine Gondel der Windkraftanlage.

Die zweite Planetenradstufe 12 ist hinsichtlich ihrer Übersetzung derart dimensioniert, daß sich bei Wahl einer durch 3 teilbaren Generatorpolzahl sowie bei optimaler Auslegung für Nenndrehzahl im wesentlichen identische Außendurchmesser von Stator der Generatoreinheit 2 und Hohlrad 124 der zweiten Planetenradstufe 12 ergeben. Generatorseitige Lager der Getriebeeinheit 1 sind elektrisch isolierend ausgeführt. Damit kann ein Stromfluß von der Getriebeeinheit 1 in einen Rotor der Generatoreinheit 2 vermieden werden.

Durch die vollkardanischen Aufhängung des Antriebssystems in Kombination mit einer Transversal- und Radialkraftfreiheit und einer Zweipunkt- bzw. Momentenlagerung des Antriebssystems entsteht ein Antriebstrang, der nur noch mit Torsion beaufschlagt wird. Durch ein gehäuseseitiges Zusammenfügen von Getriebeeinheit 1 und Generatoreinheit 2 unter Ausnutzung ihrer hohen Steifigkeit kann trotz deutlich weniger steifer Auflagerelemente in der kardanischen Aufhängung zumindest eine deutliche Reduktion von Zwangskräften im Antriebsstrang erzielt werden.

Durch Kombination der Zweipunkt- bzw. Momentenlagerung des Antriebssystems mit der vollkardanischen Aufhängung des auch die Generatoreinheit 2 umfassenden Getriebegehäuses 15 wird eine zwischen Getriebeeinheit 1 und Generatoreinheit 2 angeordnete Kupplung deutlich weniger belastet. Diese Kupplung kann daher erheblich steifer ausgeführt werden. Dies bietet wiederum weitere Vorteile in bezug auf Betriebsdynamik.

Eine Ausgestaltung der Hauptlager der Getriebeeinheit 1 kann weiterhin ohne Berücksichtigung von Auflagern nachfolgender Komponenten erfolgen. Dadurch wird ein Einsatz von Momentenlagern, die lediglich einen deutlich verringerten Bauraum benötigen, für die Hauptlager der Getriebeeinheit 1 in einer technisch beherrschbaren Form für Großantriebe möglich. Darüber hinaus ist eine torsionsbedingte Wellenflucht-Verdrillung erfindungsgemäß durch die vollkardanische Aufhängung für die Getriebeeinheit 1 schädigungsirrelevant geworden.

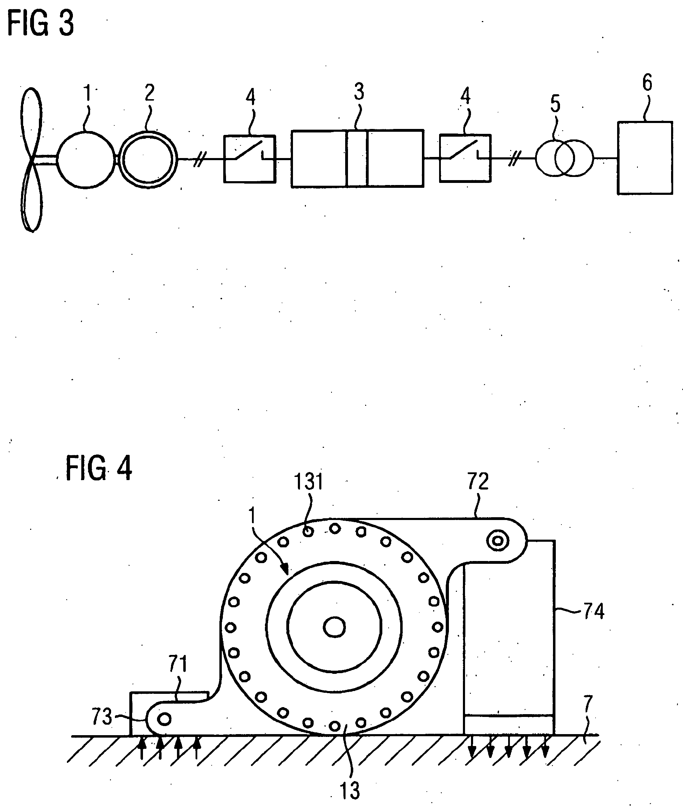

Die Generatoreinheit 2 weist im vorliegenden Ausführungsbeispiel 3 unabhängige Wicklungssysteme auf, die an einen in Figur 3 dargestellten Vollumrichter 3 angeschlossen sind. Der Vollumrichter 3 ermöglicht eine netzdynamische Entkopplung und ist über Lasttrennschalter 4 an die Generatoreinheit 2 einerseits sowie andererseits an einen Transformator 5 zur Leistungseinspeisung in ein Energieversorgungsnetz 6 angeschlossen. Darüber hinaus sind für jeden Pol getrennt isolierte Generatorwicklungen vorgesehen. Des weiteren sind die 3 unabhängigen Wicklungssysteme außerhalb des die Generatoreinheit 2 umgebenden Getriebegehäuses 15 verschaltet. Die Generatoreinheit ist 9- bis 30-polig ausgestaltet, bevorzugt 12- bis 24-polig.

Ein Rotor des Generators ist vorzugsweise mit einer Hohlwelle drehfest verbunden, mit der eine Bremsscheibe drehfest vierbunden ist. Die Bremsscheibe ist im Sinn einer einfachen Zugänglichkeit für Wartungszwecke vorteilhafterweise an einer von der Getriebeeinheit 1 abgewandten Stirnseite der Generatoreinheit 2 angeordnet. Darüber hinaus umfaßt der Rotor der Generatoreinheit 2 entsprechend dem vorliegenden Ausführungsbeispiel eine Erdungsbürste. Damit ist ein Stromfluß von der Getriebeeinheit 1 über den Rotor der Generatoreinheit sehr unwahrscheinlich.

Entsprechend dem in Figur 4 dargestellten Ausführungsbeispiel ist die vollkardanische Aufhängung 13 durch eine das Getriebegehäuse 15 vollumfänglich radial umgebende Ringstütze gebildet. Die Ringstütze 13 weist in Umfangsrichtung mehrere im wesentlichen äquidistant angeordnete Bohrungen 131 auf, in die elastische Bolzen mit jeweils einem ersten Endabschnitt eingesetzt sind. Die elastischen Bolzen sind mit einer korrespondierenden Drehmomentstütze am tragenden Strukturelement 7 der Windkraftanlage verbunden. Die korrespondierende Drehmomentstütze umfaßt ebenfalls ein Ringelement mit in Umfangsrichtung im wesentlichen äquidistant angeordneten Bohrungen, in welche die elastischen Bolzen mit einem zweiten Endabschnitt eingesetzt sind. Außerdem weist die korrespondierende Drehmomentstütze entsprechend dem in Figur 4 dargestellten Ausführungsbeispiel zwei asymmetrisch angeformte Stützarme 71, 72 auf, die jeweils mit einem Endabschnitt in eine Aufnahme 73, 74 am tragenden Strukturelement 7 eingesetzt und dort mit diesem verbunden sind.

Die elastischen Bolzen der vollkardanischen Aufhängung 13 sind axial demontierbare Elastomerbolzen. Auch der Kupplungsflansch 14 weist entsprechend Figur 1 in Umfangsrichtung mehrere im wesentlichen äquidistant angeordnete Bohrungen 141 auf, in die axial demontierbare Elastomerbolzen eingesetzt sind, die mit einem korrespondierenden Rotorwellenkupplungsflansch verbunden sind. Bei demontierten Elastomerbolzen der vollkardanischen Aufhängung 13 und des Kupplungsflansches 14 ist eine hinsichtlich einer Wellenanordnung der Getriebeeinheit 1 radiale Aus- bzw. Einbaurichtung des Antriebssystems freigegeben.

Zusatzaggregate der Getriebeeinheit 1, beispielsweise Ölanlage, Kühler und Hydraulik, sind vorteilhafterweise direkt am tragenden Strukturelement 7 der Windkraftanlage montiert. Über die vollkardanische Aufhängung 13 sowie eine elastische Kupplung zwischen Rotorwelle und Antriebswelle der Getriebeeinheit 1 sind die Zusatzaggregate damit vom Getriebegehäuse 15 entkoppelt.

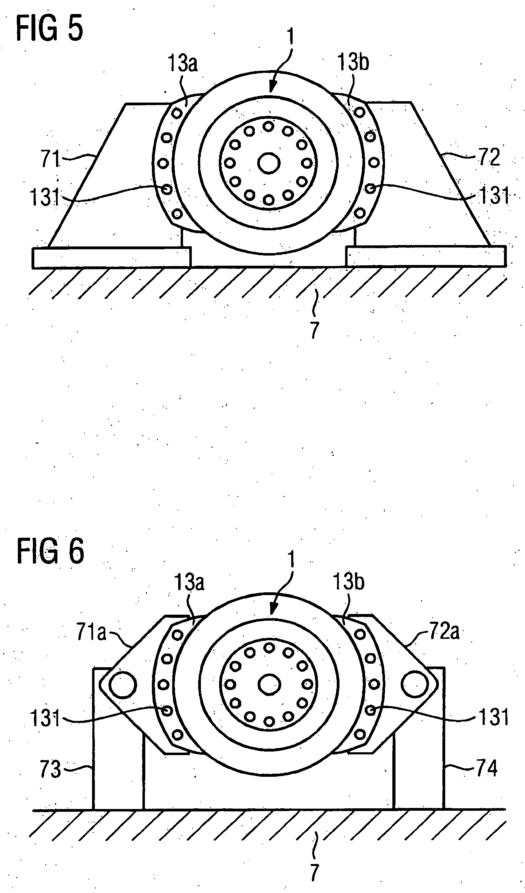

In Figur 5 und 6 sind jeweils zwei Ringsegmentstützen 13a, 13b zur teilumfänglichen vollkardanischen Aufhängung des Antriebssystems dargestellt. Die-Ringsegmentstützen 13a, 13b weisen jeweils in Umfangsrichtung mehrere im wesentlichen, äquidistant angeordnete Bohrungen 131 auf, in die elastische Bolzen eingesetzt sind. Zusätzlich sind die elastischen Bolzen mit korrespondierenden Drehmomentstützen 71, 72 am tragenden Strukturelement 7 der Windkraftanlage verbunden. Entsprechend dem in Figur 5 dargestellten Ausführungsbeispiel sind die korrespondierenden Drehmomentstützen 71, 72 direkt am tragenden Strukturelement 7 der Windkraftanlagen befestigt. Dagegen umfassen die korrespondierende Drehmomentstützen entsprechend dem in Figur 6 dargestellten Ausführungsbeispiel jeweils einen Stützarm 71a, 72a, der mit einem Endabschnitt in eine Aufnahme 73, 74 am tragenden Strukturelement eingesetzt und dort mit diesem verbunden ist. Damit bleibt eine Einbaufähigkeit wie eine herkömmliche Zweiarmstütze erhalten, ohne daß hierzu eine Hauptrahmenanpassung an der Windkraftanlage erforderlich ist. Da eine Zwangskraftfreiheit bereits gegeben ist, können bekannte Elastomerauflager verwendet werden, die vorzugsweise vollständig entsprechend schwingungsdämpfenden Kriterien ausgelegt sind.

Sowohl bei dem in Figur 5 dargestellten Ausführungsbeispiel als auch bei dem in Figur 6 dargestellten Ausführungsbeispiel umfassen die korrespondierenden Drehmomentstützen am tragenden Strukturelement 7 jeweils ein Ringsegment mit in Umfangsrichtung im wesentlichen äquidistant angeordneten Bohrungen 131. In diesen Bohrungen 131 werden die elastischen Bolzen eingesetzt, die ebenso wie beim Ausführungsbeispiel entsprechend Figur 4 als axial demontierbare Elastomerbolzen ausgestaltet sein können. Vorzugsweise schneiden sich Symmetrieachse der Drehmomentstützen und Drehachse des Antriebssystems.

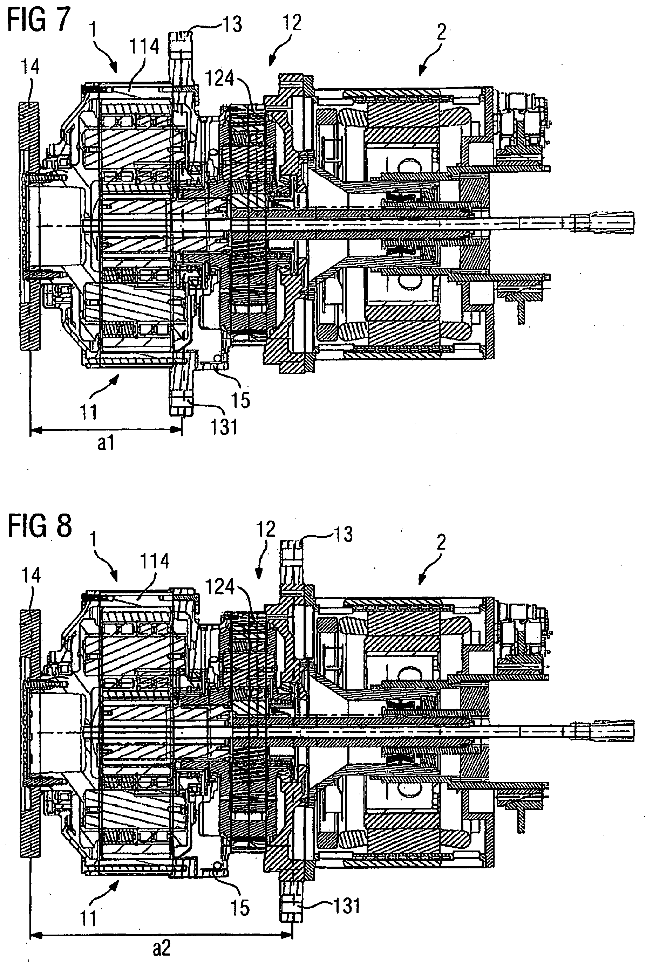

In den Figur 7 bis 10 sind mehrere Varianten eines Antriebssystems entsprechend Figur 1 jeweils in einer Schnittdarstellung abgebildet. Die Varianten unterscheiden sich hinsichtlich einer axialen Anordnung der Aufhängung 13 am Getriebegehäuse 15. Bei der in Figur 7 dargestellten Variante ist die Aufhängung 13 in einem Abstand al vom Kupplungsflansch 14 axial in einem Bereich zwischen erster 11 und zweiter Planetenradstufe 12 angeordnet. Entsprechend der Variante gemäß Figur 8 ist die Aufhängung 13 in einem Abstand a2 vom Kupplungsflansch 14 axial in einem Bereich zwischen zweiter Planetenradstufe 12 und Generatoreinheit 2 angeordnet und auf einen Schwerpunkts des Antriebssystems ausgerichtet.

Durch einen großen axialen Abstand zwischen Kupplungsflansch 14 und Aufhängung 13 können ein großer durch Hauptrahmenverformungen hervorgerufener Achsversatz sowie ein Winkelversatz von Wellen des Antriebssystems einfach kompensiert werden. Grundsätzlich können Kupplungsflansch 14 und Aufhängung 13 auch ohne axialen Abstand zueinander in einer gemeinsamen Ebene angeordnet sein.

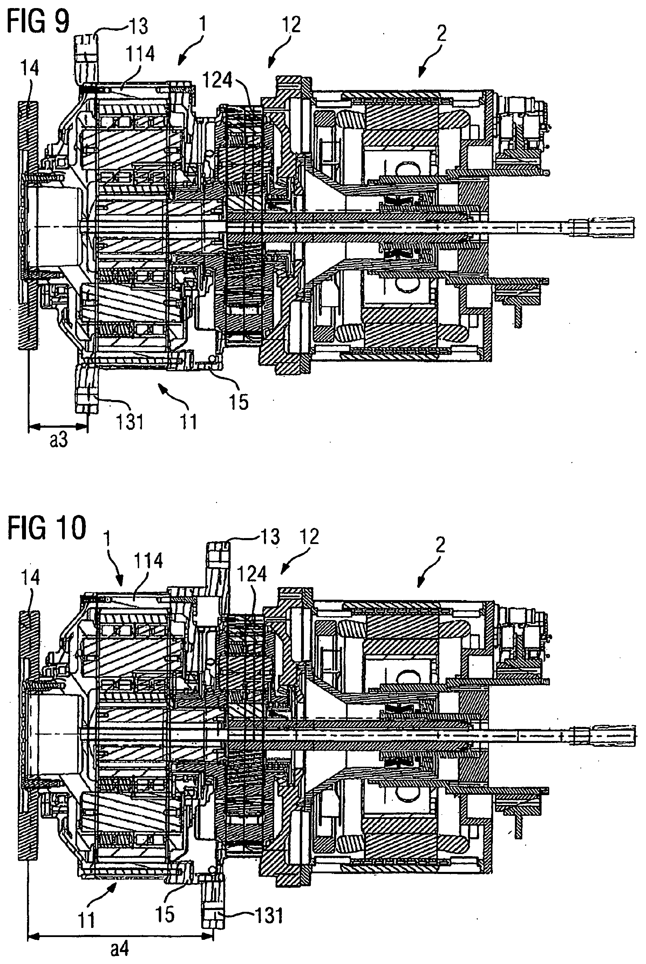

Bei der in Figur 9 dargestellten Variante ist die Aufhängung 13 in einem minimierten Abstand a3 vom Kupplungsflansch 14 axial in einem Bereich zwischen Kupplungsflansch 14 und erster Planetenradstufe 11 angeordnet. Eine im Vergleich zur Variante gemäß Figur 9 weitere Verringerung des axialen Abstands zwischen Kupplungsflansch 14 und Aufhängung 13 kann beispielsweise mit einer gekröpften Flanschplatten erzielt werden. Gemäß der Variante gemäß Figur 10 ist die Aufhängung 13 in einem Abstand a4 vom Kupplungsflansch 14 axial in einem Bereich zwischen erster 11 und zweiter Planetenradstufe 12 kraftfluß- und schwerpunktsoptimiert angeordnet und bietet entsprechende Vorteile.

Darüber hinaus kann der Kupplungsflansch entsprechend einer weiteren Ausführungsform mehrere zueinander versetzte Bohrungsreihen aufweisen, in deren Bohrungen axial demontierbare Elastomerbolzen eingesetzt sind. Dadurch kann der Kupplungsflansch hinsichtlich seines Außendurchmessers bei gleichen Bohrungsabständen verkleinert ausgeführt werden.

Des weiteren können die Elastomerbolzen unterschiedliche, entsprechend Durchmesser und Flanschart angepaßte Steifigkeiten aufweisen. Insbesondere der Kupplungsflansch mit im Vergleich zur Aufhängung kleinerem Durchmesser kann aus härterem Material sein, während die Aufhängung aus weicherem Material gefertigt sein kann.

Die Verwendung des beschriebenen Antriebssystems ist nicht nur auf Windkraftanlagen beschränkt, sondern beispielsweise auch in Mühlenantriebssystemen denkbar, bei denen die Generatoreinheit durch eine Motoreinheit ersetzt wird.

## Patentansprüche

1. Antriebssystem für eine Windkraftanlage mit
- einer zumindest eine Planetenradstufe (11, 12), die ein Hohlrad (114, 124), mehrere Planetenräder (113, 123), einen Planetenträger (112, 122) und ein Sonnenrad (111, 121) aufweist, umfassenden Getriebeeinheit (1),
- einer der Getriebeeinheit (1) zugeordneten ersten Welle, die einen mit einer Arbeitsmaschinen- oder Rotorwelle elastisch verbindbaren Kupplungsflansch (14) aufweist und über den Planetenträger (112) gelagert ist,
- einem die Getriebeeinheit (1) und eine mit einer zweiten Welle der Getriebeeinheit (1) verbundene Motor- oder Generatoreinheit (2) umgebenden Getriebegehäuse (15), das eine kardanische umfangssymmetrische oder teilsymmetrische Aufhängung zur Verbindung mit einem tragenden Strukturelement (7) der Windkraftanlage aufweist,
**dadurch gekennzeichnet,**
**daß** die kardanische Aufhängung durch eine das Getriebegehäuse (15) vollumfänglich radial umgebende Ringstütze (13) gebildet ist, die in Umfangsrichtung mehrere im wesentlichen äquidistant angeordnete Bohrungen (131) aufweist, in die elastische Bolzen eingesetzt sind, die mit einer korrespondierenden Drehmomentstütze (71, 72) am tragenden Strukturelement (7) der Windkraftanlage verbindbar sind, oder
**daß** die kardanische Aufhängung durch zwei das Getriebegehäuse (15) teilumfänglich radial umgebende Ringssegmentstützen (13a, 13b) gebildet ist, die jeweils in Umfangsrichtung mehrere im wesentlichen äquidistant angeordnete Bohrungen (131) aufweisen, in die elastische Bolzen eingesetzt sind, die mit korrespondierenden Drehmomentstützen (71a, 72a) am tragenden Strukturelement (7) der Windkraftanlage verbindbar sind.

2. Antriebssystem nach Anspruch 1,
bei dem die kardanische Aufhängung durch eine das Getriebegehäuse (15) vollumfänglich radial umgebende Ringstütze (13) gebildet ist, und bei dem die korrespondierende Drehmomentstütze (71, 72) ein Ringelement mit in Umfangsrichtung im wesentlichen äquidistant angeordneten Bohrungen umfaßt, in welche die elastischen Bolzen einsetzbar sind.

3. Antriebssystem nach Anspruch 2,
bei dem die korrespondierende Drehmomentstütze (71, 72) zwei symmetrisch oder asymmetrisch angeformte Stützarme umfaßt, die jeweils mit einem Endabschnitt in eine Aufnahme (73, 74) am tragenden Strukturelement (7) einsetzbar und dort mit diesem verbindbar sind.

4. Antriebssystem nach Anspruch 1,
bei dem die kardanische Aufhängung durch zwei das Getriebegehäuse (15) teilumfänglich radial umgebende Ringssegmentstützen (13a, 13b) gebildet ist, und bei dem die korrespondierenden Drehmomentstützen (71a, 72a) jeweils ein Ringsegment mit in Umfangsrichtung im wesentlichen äquidistant angeordneten Bohrungen umfassen, in welche die elastischen Bolzen einsetzbar sind.

5. Antriebssystem nach Anspruch 4,
bei dem die korrespondierende Drehmomentstützen (71a, 72a) jeweils einen Stützarm umfassen, der mit einem Endabschnitt in eine Aufnahme (73, 74)am tragenden Strukturelement (7) einsetzbar und dort mit diesem verbindbar ist.

6. Antriebssystem nach einem der Ansprüche 1 bis 5,
bei dem die elastischen Bolzen der kardanischen Aufhängung axial demontierbare Elastomerbolzen sind, und bei dem der Kupplungsflansch (14) in Umfangsrichtung mehrere im wesentlichen äquidistant angeordnete Bohrungen (141) aufweist, in die axial demontierbare Elastomerbolzen eingesetzt sind, die mit einem korrespondierenden Arbeitsmaschinen- oder Rotorwellenkupplungsflansch verbindbar sind.

7. Antriebssystem nach Anspruch 6,
bei dem bei demontierten Elastomerbolzen der kardanischen Aufhängung und des Kupplungsflansches (14) eine hinsichtlich einer Wellenanordnung der Getriebeeinheit (1) radiale Ausund/oder Einbaurichtung des Antriebssystems freigegeben ist.

8. Antriebssystem nach einem der Ansprüche 1 bis 7,
bei dem Zusatzaggregate der Getriebeeinheit (1) direkt am tragenden Strukturelement (7) der Windkraftanlage montiert und über die kardanische Aufhängung sowie eine elastische Kupplung (14) zwischen Arbeitsmaschinen- oder Rotorwelle und der ersten Welle der Getriebeeinheit (1) vom Getriebegehäuse (15) entkoppelt sind.

9. Antriebssystem nach Anspruch 8,
bei dem Ölanlage, Kühler und/oder Hydraulik Zusatzaggregate der Getriebeeinheit sind.

10. Antriebssystem nach einem der Ansprüche 1 bis 9,
bei dem das tragende Strukturelement (7) ein Fundamentlager mit einer Anbindung an einen Rahmen oder eine Gondel der Windkraftanlage sein.

11. Antriebssystem nach einem der Ansprüche 1 bis 10,
bei dem die Getriebeeinheit (1) ein erstes und ein zweites Hauptlager (115, 116) umfaßt, mittels derer die erste Welle der Getriebeeinheit (1) gelagert ist, und die zwischen Planetenträgerwangen und Getriebegehäuse (15) angeordnet sind.

12. Antriebssystem nach einem der Ansprüche 1 bis 11,
beidem die Getriebeeinheit eine erste und zweite Planetenradstufe (11, 12) in koaxialer Bauform umfaßt.

13. Antriebssystem nach Anspruch 12,
bei dem die zweite Planetenradstufe (12) hinsichtlich ihrer Übersetzung derart dimensioniert ist, daß sich bei Wahl einer durch 3 teilbaren Generatorpolzahl sowie bei optimaler Auslegung für Nenndrehzahl im wesentlichen identische Außendurchmesser von Stator der Generatoreinheit (2) und Hohlrad (124) der zweiten Planetenradstufe (12) ergeben.

14. Antriebssystem nach einem der Ansprüche 1 bis 13,
bei dem die Motor- oder Generatoreinheit (2) 3 unabhängige Wicklungssysteme aufweist, die an einen Vollumrichter angeschlossen sind.

15. Antriebssystem nach Anspruch 14,
bei dem für jeden Pol getrennt isolierte Motor- oder Generatorwicklungen vorgesehen sind, und bei dem die 3 unabhängigen Wicklungssysteme außerhalb des die Motor- oder Generatoreinheit (2) umgebenden Getriebegehäuses (15) verschaltet sind.

16. Antriebssystem nach einem der Ansprüche 14 oder 15,
bei dem die Motor- oder Generatoreinheit (2) 12- bis 24-polig ausgestaltet ist.

17. Antriebssystem nach einem der Ansprüche 14 bis 16,
bei dem ein Rotor des Motors oder Generators (2) mit einer Hohlwelle drehfest verbunden ist, mit der eine Bremsscheibe drehfest verbunden ist.

18. Antriebssystem nach Anspruch 17,
bei dem die Bremsscheibe an einer von der Getriebeeinheit (1) abgewandten Stirnseite der Motor- oder Generatoreinheit (2) angeordnet ist.

19. Antriebssystem nach einem der Ansprüche 17 oder 18,
bei dem der Rotor der Motor- oder Generatoreinheit (2) eine Erdungsbürste umfaßt.

20. Antriebssystem nach einem der Ansprüche 1 bis 19,
bei dem motor- oder generatorseitige Lager der Getriebeeinheit (1) elektrisch isolierend ausgeführt sind.

21. Antriebssystem nach einem der Ansprüche 1 bis 20,
bei dem die Getriebeeinheit (1) mit einer Generatoreinheit (2) verbunden ist, und bei dem die erste Welle der Getriebeeinheit (1) eine getriebeseitige Antriebswelle ist, und bei dem die zweite Welle der Getriebeeinheit (1) eine getriebeseitige Abtriebswelle, und bei dem der Kupplungsflansch (14) der getriebeseitigen Antriebswelle mit einer Rotorwelle verbindbar ist.

## Claims

1. Drive system for a wind turbine with
- a transmission unit (1) comprising at least one planet wheel stage (11, 12), which has a hollow wheel (114, 124), several planet wheels (113, 123), a planet carrier (112, 122) and a sun wheel (111, 121),
- a first shaft associated with the transmission unit (1), which has a coupling flange (14) that can be elastically connected to a work machine shaft or rotor shaft and is mounted via the planet carrier (112),
- a gear case (15) enclosing the transmission unit (1) and a motor unit or generator unit (2) connected to a second shaft of the transmission unit (1), which gear case (15) has a cardanic circumferentially symmetrical or partially symmetrical suspension for connection to a supporting structural element (7) of the wind turbine,
**characterised in that**
the cardanic suspension is formed by a ring support (13) fully circumferentially radially enclosing the gear case (15), which ring support (13) has several essentially equidistantly arranged drill holes (131) in the circumferential direction, into which elastic bolts are inserted which can be connected to a corresponding torque support (71, 72) on the supporting structural element (7) of the wind turbine, or
the cardanic suspension is formed by two ring segment supports (13a, 13b) partially circumferentially radially enclosing the gear case (15), each of which has several essentially equidistantly arranged drill holes (131) in the circumferential direction, into which elastic bolts are inserted which can be connected to corresponding torque supports (71a, 72a) on the supporting structural element (7) of the wind turbine.

2. Drive system according to claim 1,
wherein the cardanic suspension is formed by a ring support (13) fully circumferentially radially enclosing the gear case (15), and wherein the corresponding torque support (71, 72) comprises a ring element with essentially equidistantly arranged drill holes in the circumferential direction, into which the elastic bolts can be inserted.

3. Drive system according to claim 2,
wherein the corresponding torque support (71, 72) comprises two symmetrically or asymmetrically moulded support arms, an end section of each of which can be inserted into a receptacle (73, 74) on the supporting structural element (7) and can there be connected thereto.

4. Drive system according to claim 1,
wherein the cardanic suspension is formed by two ring segment supports (13a, 13b) partially circumferentially radially enclosing the gear case (15), and wherein the corresponding torque supports (71a, 72a) each comprise a ring segment with essentially equidistantly arranged drill holes in the circumferential direction, into which the elastic bolts can be inserted.

5. Drive system according to claim 4,
wherein the corresponding torque supports (71a, 72a) each comprise a support arm, an end section of which can be inserted into a receptacle (73, 74) on the supporting structural element (7) and can there be connected thereto.

6. Drive system according to one of claims 1 to 5,
wherein the elastic bolts of the cardanic suspension are axially removable elastomer bolts, and wherein the coupling flange (14) has several essentially equidistantly arranged drill holes (141) in the circumferential direction, into which axially removable elastomer bolts are inserted, which can be connected to a corresponding work machine shaft coupling flange or rotor shaft coupling flange.

7. Drive system according to claim 6,
wherein in the case of removed elastomer bolts of the cardanic suspension and of the coupling flange (14) a radial removal and/or insertion direction of the drive system is enabled in respect of a shaft arrangement of the transmission unit (1).

8. Drive system according to one of claims 1 to 7,
wherein add-on units of the transmission unit (1) are mounted directly on the supporting structural element (7) of the wind turbine and are decoupled from the gear case (15) via the cardanic suspension as well as an elastic coupling (14) between work machine shaft or rotor shaft and the first shaft of the transmission unit (1).

9. Drive system according to claim 8,
wherein oil system, cooler and/or hydraulics are add-on units of the transmission unit.

10. Drive system according to one of claims 1 to 9,
wherein the supporting structural element (7) is a foundation bearing with a connection to a frame or a nacelle of the wind turbine.

11. Drive system according to one of claims 1 to 10,
wherein the transmission unit (1) comprises a first and a second main bearing (115, 116), by means of which the first shaft of the transmission unit (1) is mounted, and which are arranged between planet carrier side walls and gear case (15).

12. Drive system according to one of claims 1 to 11,
wherein the transmission unit comprises a coaxially designed first and second planet wheel stage (11, 12).

13. Drive system according to claim 12,
wherein the second planet wheel stage (12) is dimensioned in respect of its transmission such that when a number of generator poles divisible by 3 is chosen and with an optimal design for rated speed, essentially identical external diameters of the stator of the generator unit (2) and the hollow wheel (124) of the second planet wheel stage (12) are produced.

14. Drive system according to one of claims 1 to 13,
wherein the motor unit or generator unit (2) has 3 independent winding systems which are connected to a full power converter.

15. Drive system according to claim 14,
wherein separately insulated motor or generator windings are provided for each pole, and wherein the 3 independent winding systems are connected outside the gear case (15) enclosing the motor unit or generator unit (2).

16. Drive system according to one of claims 14 or 15,
wherein the motor unit or generator unit (2) is designed to be 12- to 24-pole.

17. Drive system according to one of claims 14 to 16,
wherein a rotor of the motor or generator (2) is connected in a rotationally fixed manner to a hollow shaft, to which a brake disk is connected in a rotationally fixed manner.

18. Drive system according to claim 17,
wherein the brake disk is arranged on a front face of the motor unit or generator unit (2) facing away from the transmission unit (1).

19. Drive system according to one of claims 17 or 18,
wherein the rotor of the motor unit or generator unit (2) comprises a grounding brush.

20. Drive system according to one of claims 1 to 19,
wherein motor-side or generator-side bearings of the transmission unit (1) are designed to be electrically insulating.

21. Drive system according to one of claims 1 to 20,
wherein the transmission unit (1) is connected to a generator unit (2), and wherein the first shaft of the transmission unit (1) is a gearbox-side drive shaft, and wherein the second shaft of the transmission unit (1) is a gearbox-side output shaft, and wherein the coupling flange (14) of the gearbox-side drive shaft can be connected to a rotor shaft.

## Revendications

1. Système d'entraînement pour une éolienne, comprenant
- un groupe (1) de transmission, comprenant au moins un étage (11,12) de roue satellite, qui a une roue (114, 124) à denture intérieure, plusieurs roues (113,123) satellites, une cage (112, 122) de transmission planétaire et une roue (111, 121) solaire,
- un premier arbre, qui est associé au groupe (1) de transmission et qui a une bride (14) d'accouplement pouvant être reliée élastiquement à l'arbre d'une machine fournissant du travail ou à un arbre de rotor et pouvant être montée par l'intermédiaire de la cage (112) de transmission planétaire,
- un carter (15) de transmission, qui entoure le groupe (1) de transmission et un groupe de moteur ou génératrice, relié à un deuxième arbre du groupe (1) de transmission, et qui a une suspension à la cardan, à symétrie périphérique ou à symétrie partielle, de liaison à un élément (7) de structure porteur de l'éolienne,
**caractérisé**
**en ce que** la suspension à la cardan est formée par un appui (13) annulaire qui entoure radialement sur tout le pourtour le carter (15) de la transmission et qui a, dans la direction du pourtour, plusieurs trous (131), qui sont sensiblement équidistants et dans lesquels sont insérés des axes élastiques qui peuvent être reliés à des appuis (71, 72) de couple de rotation correspondants de l'élément (7) de structure porteur de l'éolienne ou
**en ce que** la suspension à la cardan est formée par deux appuis (13a,13b) en forme de segment annulaire, qui entourent radialement, sur une partie du pourtour, le carter (15) de la transmission et qui ont respectivement, dans la direction du pourtour, plusieurs trous (131) sensiblement équidistants, dans lesquels sont insérés des axes élastiques qui peuvent être reliés à des appuis (71a, 72a) de couple de rotation correspondants de l'élément (7) de structure porteur de l'éolienne.

2. Système d'entraînement suivant la revendication 1,
dans lequel la suspension à la cardan est formée par un appui (13) annulaire, entourant radialement, sur tout le pourtour, le carter (15) de la transmission et dans lequel les appuis (71, 72) de couple de rotation correspondants comprennent un élément annulaire ayant des trous sensiblement équidistants dans la direction du pourtour, dans lesquels les axes élastiques peuvent être insérés.

3. Système d'entraînement suivant la revendication 2,
dans lequel les appuis (71, 72) de couples de rotation correspondant comprennent deux bras d'appui formés symétriquement ou dissymétriquement, qui peuvent être insérés respectivement par un tronçon d'extrémité dans un logement (73, 74) de l'élément (7) de structure porteur et y être reliés à celui-ci.

4. Système d'entraînement suivant la revendication 1,
dans lequel la suspension à la cardan est formée par deux appuis (13a,13b) en forme de segments annulaires entourant radialement, sur une partie du pourtour, le carter (15) de la transmission et dans lequel les appuis (71a, 72a) de couple de rotation correspondants comprennent respectivement un segment annulaire ayant des trous sensiblement équidistants dans la direction du pourtour, dans lesquels les axes élastiques peuvent être insérés.

5. Système d'entraînement suivant la revendication 4,
dans lequel les appuis (71a, 72a) de couple de rotation correspondants comprennent respectivement un bras d'appui qui, par un tronçon d'extrémité, peuvent être insérés dans un logement (73, 74) de l'élément (7) de structure porteur et y être reliés à celui-ci.

6. Système d'entraînement suivant l'une des revendications 1 à 5,
dans lequel les axes élastiques de la suspension à la cardan sont des axes en élastomère pouvant être démontés axialement et dans lequel la bride (14) d'accouplement a, dans la direction du pourtour, plusieurs trous (141) sensiblement équidistants, dans lesquels sont insérés des axes en élastomère démontables axialement qui peuvent être reliés à une bride d'accouplement correspondante de machines fournissant du travail ou d'arbres de rotor.

7. Système d'entraînement suivant la revendication 6,
dans lequel, lorsque l'axe en élastomère de la suspension à la cardan et de la bride (14) d'accouplement est démonté, une direction radiale de démontage et/ou de montage du système d'entraînement, en ce qui concerne l'agencement d'arbres du groupe (1) de transmission, est libérée.

8. Système d'entraînement suivant l'une des revendications 1 à 7,
dans lequel, des groupes supplémentaires du groupe (1) de transmission sont montés directement sur l'élément (7) de structure porteur de l'éolienne et sont, par la suspension à la cardan ainsi que par un accouplement (14) élastique entre l'arbre de la machine fournissant du travail ou l'arbre du rotor et le premier arbre du groupe (1) de transmission, découplé du carter (15) de la transmission.

9. Système d'entraînement suivant la revendication 8,
dans lequel, un système d'huile, un refroidisseur et/ou une hydraulique sont des groupes supplémentaires du groupe de transmission.

10. Système d'entraînement suivant l'une des revendications 1 à 9,
dans lequel, l'élément (7) de structure porteur est un palier de socle ayant une liaison à un cadre ou à une nacelle de l'éolienne.

11. Système d'entraînement suivant l'une des revendications 1 à 10,
dans lequel, le groupe (1) de transmission comprend un premier et un deuxième paliers (115, 116) principaux, au moyen desquels le premier arbre du groupe (1) de transmission est monté et qui sont disposés entre des joues de la cage de transmission planétaire et le carter (15) de la transmission.

12. Système d'entraînement suivant l'une des revendications 1 à 11,
dans lequel, le groupe de transmission comprend un premier et un deuxième étages (11, 12) de roue satellite dans une forme de construction coaxiale.

13. Système d'entraînement suivant la revendications 12,
dans lequel, le deuxième étage (12) de roue satellite est, du point de vue de sa transmission, dimensionnée de manière que, si l'on choisit un nombre de pôles de génératrice divisibles par 3, ainsi qu'en ayant une conception optimum de la vitesse de rotation nominale, on obtienne un diamètre extérieur sensiblement identique du stator du groupe (2) de génératrice et de la roue (124) à denture intérieure du deuxième étage (12) de roue satellite.

14. Système d'entraînement suivant l'une des revendications 1 à 13,
dans lequel, le groupe (2) de moteur ou de génératrice a des systèmes d'enroulement indépendants, qui sont raccordés à un convertisseur à enroulements séparés.

15. Système d'entraînement suivant la revendication 14,
dans lequel, il est prévu pour chaque pôle des enroulements de moteur ou de génératrice isolés séparément et dans lequel les trois systèmes d'enroulement indépendants sont câblés à l'extérieur du carter (15) de la transmission entourant le groupe de moteur et de génératrice.

16. Système d'entraînement suivant l'une des revendications 14 ou 15,
dans lequel l'unité (2) de moteur ou de génératrice a de 12 à 24 pôles.

17. Système d'entraînement suivant l'une des revendications 14 à 16,
dans lequel un rotor du moteur ou de la génératrice (2) est solidaire en rotation de l'arbre à denture intérieure, dont un disque de frein est solidaire en rotation.

18. Système d'entraînement suivant la revendication 17,
dans lequel le disque de frein est monté sur un côté frontal, éloigné du groupe (1) de transmission, du groupe (2) de moteur ou de génératrice.

19. Système d'entraînement suivant l'une des revendications 17 ou 18,
dans lequel du groupe de moteur ou de génératrice comprend un balai de mise à la terre.

20. Système d'entraînement suivant l'une des revendications 1 à 19,
dans lequel des paliers du côté du moteur ou de la génératrice du groupe (1) de transmission sont réalisés en étant isolants du point de vue électrique.

21. Système d'entraînement suivant l'une des revendications 1 à 20,
dans lequel le groupe (1) de transmission est relié à un groupe (2) de génératrice et dans lequel le premier arbre du groupe (1) de transmission est un arbre d'entraînement du côté de la transmission et dans lequel le deuxième arbre du groupe (1) de transmission est un arbre de sortie du côté de la transmission et dans lequel la bride (14) d'accouplement de l'arbre d'entraînement du côté de la transmission peut être reliée à un arbre de rotor.
